**Europäisches Patentamt**

(19) **European Patent Office**

**Office européen des brevets**

(11) Publication number: **0 181 390**
**B1**

(12) # EUROPEAN PATENT SPECIFICATION

(45) Date of publication of the patent specification:
**10.08.88**

(51) Int. Cl.⁴: **F 16 B 25/04, F 16 B 33/02**

(21) Application number: **85902699.9**

(22) Date of filling: **07.05.85**

(86) International application number:
**PCT/SE 85/00199**

(87) International publication number:
**WO 85/05415 (05.12.85 Gazette 85/26)**

(54) **WOOD SCREW.**

(30) Priority: **23.05.84 SE 8402777**

(43) Date of publication of application:
**21.05.86 Bulletin 86/21**

(45) Publication of the grant of the patent:
**10.08.88 Bulletin 88/32**

(84) Designated Contracting States:
**AT BE CH DE FR GB IT LI LU NL**

(56) References cited:
**GB-A-2 070 996**
**US-A-2 255 997**
**US-A-3 207 023**

(73) Proprietor: **SAHLIN, Anders, Akergatan 2, S-828 00 Edsbyn (SE)**
Proprietor: **SAHLIN, Mats, Lärksvägen 2, S-822 00 Alfta (SE)**

(72) Inventor: **SAHLIN, Anders, Akergatan 2, S-828 00 Edsbyn (SE)**
Inventor: **SAHLIN, Mats, Lärksvägen 2, S-822 00 Alfta (SE)**

(74) Representative: **Rostovanyi, Peter, AWAPATENT AB Box 5117, S-200 71 Malmö (SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convension).

LIBER, STOCKHOLM 1988

## Description

The invention relates to a wood screw comprising a cylindrical core, the diameter of which does not exceed that of a prebored hole in a wooden body, and two threads, viz. a main thread and an auxiliary thread, of which the former protrudes considerably more from the circumference of the core than the latter, the front end of the core having a recess provided with an edge acting as a cutters, the two threads being formed as sharp threads, i.e. being thin in relation to their depth and terminating at a distance from the front end of the screw (GB-A-2 070 996).

When various wooden items are assembled by means of a screw joint, it is important that the screws remain firmly tightened for a long time. This is especially important in connection with the assembly of furniture items such as knobs or handles on front pieces of drawers and cabinets, or panels making an angle with each other. In common practice, conventional wood screws remain tightened but for a short period of time, inter alia because the threads tend to split the fibres of the wood in the boundary surface between the outer side of the screw and the wall of the hole in which the screw is fastened. Another reason for the screws remaining in place is that conventional wood screws are always, at least partially, conical or tapered. For these reasons, simple wood screws are, to a large extent, no longer used in the furniture industry, a combination of a mounting sleeve and metal screw being instead chosen, more precisely in the form of a cylindrical metal sleeve having both an external thread, which is screwed in advance in a prebored hole, and an internal thread for the metal screw which is screwed in the sleeve when finally assembling the furniture items. Thus using two different elements to provide the desired screw joint is, however, extraordinarily expensive, primarily because of the additional operation in the factory, i.e. mounting the sleeve in advance.

It is the object of the present invention to eliminate the above-mentioned disadvantages and provide a wood screw which in itself is capable of staying in the intended place for a long time. To this end, the invention proposes a wood screw mentioned by way of introduction and characterised in that the two threads terminate at a distance from the front end of the cylindrical core, thus leaving a substantially cylindrical core portion without any threads which is adapted to initially guide the screw into the hole before the threads bite, and that the recess and, thus, the cutting edge are longer than the threadless core portion in order to position the end of one or more threads in direct association with the cutting edge and thus ensure the cutting, rather than splitting, of wood fibres as the threads enter the wooden body surrounding the hole.

DE-A-2 521 555 discloses a screw adapted for fastening in brickwork, which in addition to a fairly deep thread also has a shallower threadlike cam which extends between the first-mentioned thread on the outside of a cylindrical core. In this case, it is, however, not a matter of the shallower thread penetrating the wall of the hole in which the screw is fastened. On the contrary, the top of the shallower thread serves to abut against the wall of the hole while providing an annular gap between the wall of the hole and the circumference of the core. Furthermore, the screw has no cutting edge whatever at its front end.

DE-A-3 201 846 discloses a screw intended for fastening in plastics and having two thread cams, and two recesses at the screw front end. These two thread cams are, however, of exactly the same depth, and the core is not cylindrical but rather designed with V-shaped notches which follow the thread cams. Therefore, no straight cutting edge is formed at the said recess.

GB-A-2 070 996 aund US-A-3 207 023 disclose selfboring type screws which admittedly have both a main thread and a shallower auxiliary thread and which at their front end have a conically tapered but unsymmetrical driving-in part with cutting edges. This driving-in part of the prior art screws does, however, not bear any resemblance to the driving-in part of the present invention in so far as it is either completely meaningless or even devastating when driven into easily damaged wooden bodies. Assuming that the screw is screwed in a prebored hole, the tapered cutting edges will in fact have no effect at all. If, on the other handt is assumed that the screw is fastened directly in the workpiece without the use of a prebored holehe conical driving-in part would splitor example, a wooden knob, long before the said part has made a hole in the knob. Futhermore, the prior art screws have no recesses, the length of which exceeds the distance between the screw front end and the threads. In actual practice, this means that the threads of the prior art screws do not have any sharp ends of the type provided in the present invention and ensuring that the wood fibres in the workpiece are cut, rather than split, as the threads enter the wooden material.

Furthermore, US-A-4 312 616 discloses a screw designed with a single thread and having at its front end a recess which is defined by a cutting edge. However the length of this cutting edge does not exceed the distance between the single thread and the core front end, which means that the thread does not terminate in association with the cutting edge and, thus, has no sharp front edge of the type which, according to the present invention, ensures cutting of the wood fibres. It should be further noted that the prior art screw is thicker at its front endeaning that the hole made by the cutting edge becomes considerably larger than the core diameter, whereby the screw will have poor stability in the hole.

In the drawings:

Fig. 1 is a perspective view of a screw according to the invention;

Fig. 2 is a side view of the said screw;

Fig. 3 is a similar side view showing the screw turned through 90°;

Fig. 4 is an end view of the screw as seen from above;

Fig. 5 is a cross-section along the line V-V in Fig. 3, and

Fig. 6 is an enlarged cross-sectional view of a screw fastened in a wooden object.

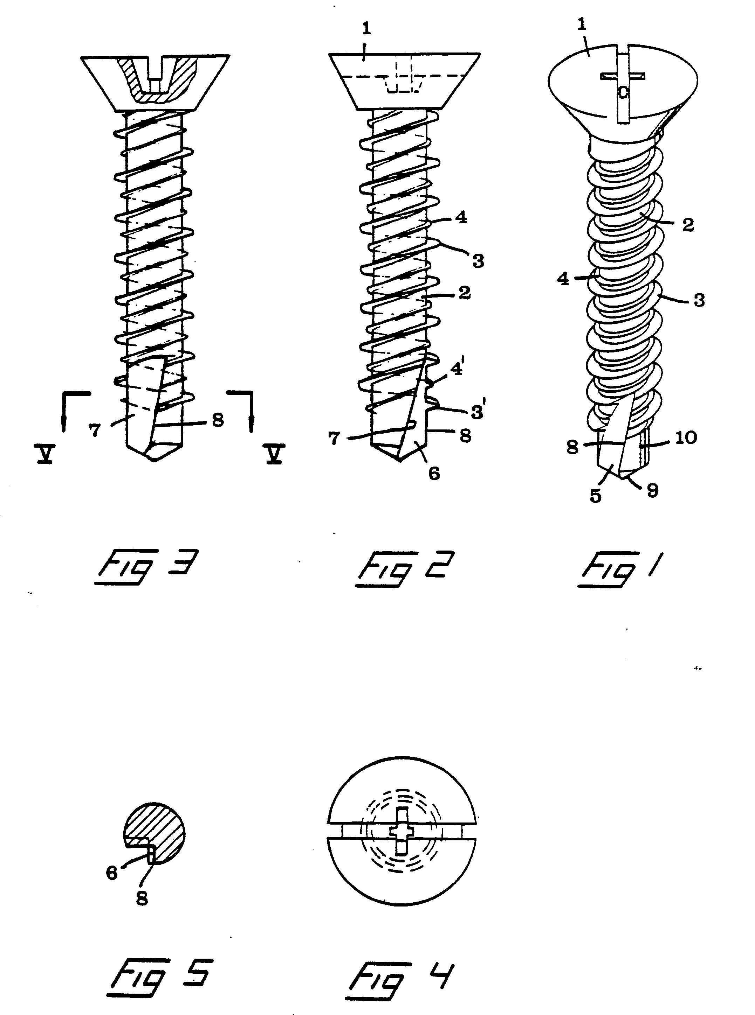

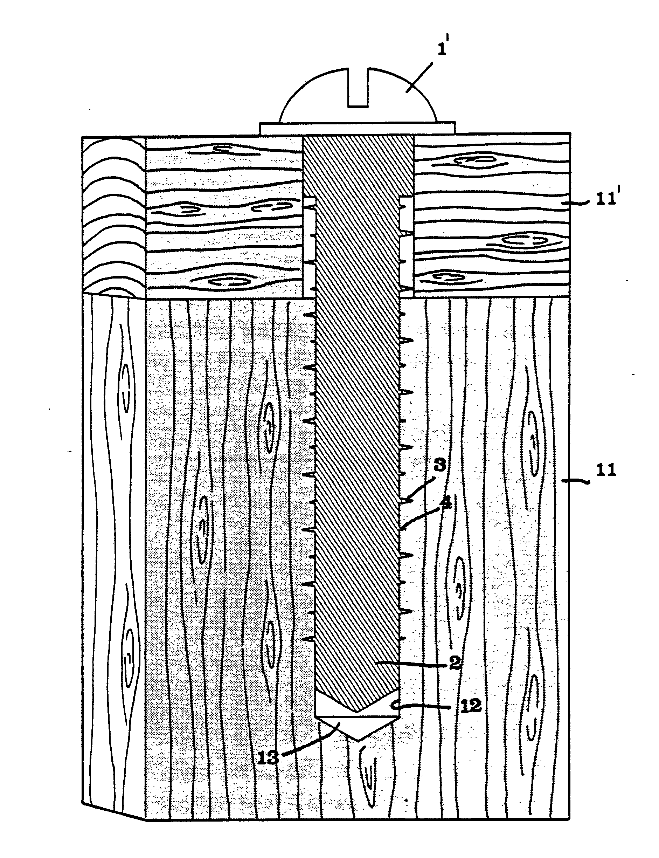

The screw shown in Figs. 1 - 5 is countersunk and has a conical head 1 and a core 2 which in accordance with the invention is generally cylindrical. Along the circumference of said cylindrical core 2, two threads are extending viz. a main thread 3 and an auxiliary thread 4, the former being considerably deeper than the latter. In actual practice, the main thread 3 may be 2 - 4 or preferably about 3 times deeper than the auxiliary thread 4. These two threads are formed as sharp threads, i.e. they are comparatively thin in relation to their depth. As indicated in Fig. 6, the maximum thickness of the thread cam, i.e. at the base, may be about 30 %, at the depth of the thread cam. In actual practice, the angle of the thread profile can be 20 - 30°.

At the front end of the cylindrical core 2, a recess 5 is milled which is defined by two flat surfaces 6 and 7. The surface 6 makes an angle of 5 - 15° or preferably about 10° with a plane parallel to the center axis of the core, while the other surface 7 forms an angle of 10 - 20° or preferably about 150 with such a plane. The edge 8 in the transition between the surface 6 and the circumference of the core 2 forms a cutter which, when the screw is driven in, will shear off the fibres of the wood which may be present in the wall of the prebored hole inwardly of an imaginary cylinder configuration of the same diameter as the core 2. As appears from Fig. 3 the cutting edge 8 is inclined in the same direction as the threads with respect to the core center line, although at a different angle.

Another distinctive feature of the screw according to the invention is that the two threads 3, 4 terminate at a distance from the front end 9 of the cylindrical core, thus leaving a threadless core portion 10 which is adapted to initially guide the screw into the hole before the threads start to bite. However, as is evident from Figs. 1 - 3, the recess 5 and, thus, the cutting edge 8 are longer than the threadless core portion 10, which means that one or more end portions 3', 4' of the thread cams will be positioned in direct association with the cutting edge 8 such that they cut into the wood in direct connection with the shearing operation performed by the cutting edge. This also ensures that the ends 3', 4' of the threads are sharp or angular in that the recess is milled in the screw after the threads have been cut. Fig. 4 shows the head of the screw designed with a combined screw driver slot and cross slot.

Fig. 6 illustrares how two wooden items 11, 11', for example two panels, are joined by means of a screw, the design of which, except for the raised head 1', conforms to the screw according to Figs. 1 - 5. From the cross-section it appears that the circumference of the core 2 closely engages against the wall 12 of the prebored hole 13 and that both the main thread 3 and the auxiliary thread 4 have cut into the wood material. By the presence of the auxiliary thread 4, the material between the cams of the main thread will be compressed such that the main thread is pinched, thus counteracting loosening of the screw. Since the thread cams are thin or sharphey will readily cut the wood fibres exactly at the point where the threads enter the wood, but without splitting the fibres in the manner as is usual with conventional wood screws.

In practical experiments, it has been possible to establish that the screw according to the invention maintains its position and tightening ability for a very long period of time. Therefore this screw is very well suited to replace the combination of a sleeve and metal screws mentioned by way of introduction, when assembling items of furniture.

## Claims

1. A wood screw comprising a cylindrical core (2), the diameter of which does not exceed that of a prebored hole (13) in a wooden body, and two threads, viz. a main thread (3) and an auxiliary thread (4), of which the former protrudes considerably more from the circumference of the core than the latterhe front end of the core (2) having a recess (5) provided with an edge (8) acting as a cutter, the two threads (3, 4) being formed as sharp threads i.e. being thin in relation to their depth, and terminating at a distance from the front end (9) of the screw, characterised in that the two threads (3, 4) terminate at a distance from the front end of the cylindrical core (2), thus leaving a substantially cylindrical core portion (10) without any threads which is adapted to initially guide the screw into the hole (13) before the threads bite, and that the recess (5) and, thushe cutting edge (8) are longer than the threadless core portion (10) in order to position the end (3', 4') of one or more threads in direct association with the cutting edge (8) and thus ensure the cutting, rather than splitting, of wood fibres as the threads enter the wooden body surrounding the hole.

2. A wood screw according to claim 1, characterised in that the cutting edge (8) extends at an angle of for example 5 - 15° or about 10°, to a generatrix along the circumference of the core.

## Patentansprüche

1. Holzschraube, umfassend einen zylindrischen Kern (2), dessen Durchmesser nicht grösser ist als der eines vorgebohrten Lochs (13) in einem hölzernen Gegenstand, sowie zwei Gewinde, und zwar ein Hauptgewinde (3) und ein Hilfsgewinde (4), von denen das erstere vom Kernumfang bedeutend weiter vorsteht als das letztere, wobei das vordere Ende des Kerns (2) eine Ausnehmung (5) mit einer als Schneidglied dienenden Kante (8) hat, und wobei die beiden Gewinde (3, 4) als scharfe Gewinde ausgebildet sind, d.h. sie sind dünn im Verhältnis zu ihrer Tiefe, und in einem Abstand vom vorderen Ende (9) der Schraube enden, dadurch gekenngezeichnet, daß die beiden Gewinde (3, 4) in einem Abstand vom vorderen Ende des zylindrischen Kerns (2) enden, so daß ein hauptsächlich zylindrischer Kernteil (10) zurückbleibt, der keine Gewinde aufweist und anfangs die Schraube in das Loch (13) hineinleitet, bevor die Gewinde greifen, und daß die Ausnehmung (5) und somit die Schneidkante (8) länger als der gewindelose Kernteil (10) sind, um das Ende (3', 4') eines oder mehrerer Gewinde in unmittelbarem Anschluss an die Schneidkante (8) zu lokalisieren und somit sicherzustellen, dass die Holzfasern zerschnitten, statt zersplittert werden, wenn die Gewinde in den das Loch umgebenden, hölzernen Gegenstand eindringen.

2. Holzschraube nach Anspruch 1, dadurch gekenngezeichnet, daß sich die Schneidkante (8) in einem Winkel von beispielsweise 5 - 15° oder etwa 10° zu einer Erzeugenden längs des Kernumfangs erstreckt.

**Revendications**

1. Vis à bois comportant un fût cylindrique (2) dont le diamètre ne dépasse pas celui d'un trou prépercé (13) dans une pièce de bois, et deux filets, à savoir un filet principal (3) et un filet auxiliaire (4), dont le premier vient considérablement plus en saillie depuis la circonférence du fût que le second, l'extrémité avant du fût (2) présentant un évidement (5) muni d'un bord (8) qui agit comme un couteau, les deux filets (3, 4) étant formés comme filets effilés, c'est-à-dire étant minces par rapport à leur profondeur, et se terminant à une certaine distance de l'extrémité avant (9) de la vis, caractérisée en ce que les deux filets (3, 4) se terminent à une certaine distance de l'extrémité avant du fût cylindrique (2), laissant ainsi une portion (10) sensiblement cylindrique du fût sans aucun filet, portion qui est adaptée à guider initialement la vis dans le trou (13) avant que les filets ne mordent; et en ce que l'évidement (5), et donc le bord coupant (8) sont plus longs que la portion de fût (10) sans filet, de façon à placer l'extrémité (3', 4') d'un ou de plusieurs filets en association directe avec le bord coupant (8) et à garantir ainsi la coupe, plutôt que le fendage, des fibres de bois lorsque les filets pénètrent dans la pièce de bois qui entoure le trou.

2. Vis à bois selon la revendication 1, caractérisée en ce que le bord coupant (8) s'étend sous un angle de par exemple 5 - 15° ou environ 10° par rapport à une génératrice située contre la circonférence du fût.

_Fig 3_

_Fig 2_

_Fig 1_

_Fig 5_

_Fig 4_